## Europäisches Patentamt
## European Patent Office
## Office européen des brevets

(19)

(11) Veröffentlichungsnummer: **0 099 487**
**B1**

(12)

# EUROPÄISCHE PATENTSCHRIFT

(45) Veröffentlichungstag der Patentschrift:
**15.10.86**

(51) Int. Cl.⁴: **F 16 N 7/34**

(21) Anmeldenummer: **83106201.3**

(22) Anmeldetag: **25.06.83**

(54) **Aus drei Einheiten bestehende Baugruppe für Druckluft-Schmiermittelsysteme.**

(30) Priorität: **06.07.82 JP 101273/82**

(43) Veröffentlichungstag der Anmeldung:
**01.02.84 Patentblatt 84/5**

(45) Bekanntmachung des Hinweises auf die Patenterteilung:
**15.10.86 Patentblatt 86/42**

(84) Benannte Vertragsstaaten:
**DE FR GB IT**

(56) Entgegenhaltungen:
**FR-A-2 108 306**
**GB-A-857 963**
**US-A-3 559 764**

(73) Patentinhaber: **Shoketsu Kinzoku Kogyo Kabushiki Kaisha, 1-16- 4, Shimbashi Minato- ku, Tokio (JP)**

(72) Erfinder: **Yamazaki, Masamichi Shoketsu Kinzoku, Kogyo Co., Ltd. Soka Plant 938 Inari- cho, Soka- City Saitama Prefecture (JP)**

(74) Vertreter: **Keil, Rainer A., Dipl.- Phys. Dr., Patentanwälte KEIL & SCHAAFHAUSEN Ammelburgstrasse 34, D-6000 Frankfurt am Main 1 (DE)**

EP 0 099 487 B1

## Beschreibung

Die Erfindung bezieht sich auf eine Baugruppe für Schmiermittelsysteme, die mit Druckluft arbeiten gemäß dem Oberbegriff des Anspruchs 1.

Ein Druckluftleitungssystem, insbesondere ein solches für die Zufuhr von Schmiermittel in zerstäubter oder versprühter Form auf Apparateteile, die einer Schmierung bedürfen, hat üblicherweise als Einheiten einen Filter für die Reinigung der Versorgungsluft, einen Regler für die Druckregelung des Luftstromes und ein Schmiergerät zum Versprühen des Schmiermittels in fein verteilter Form in einem Druckluftstrom. Diese Einheiten werden üblicherweise als Baugruppe, also in Form eines Drei-Einheiten-Bausatzes eingesetzt.

Bisher sind die einzelnen Einheiten, d.h. Druckluftfilter, Luftdruckregler und Schmiergerät unabhängig voneinander ohne jegliche Beziehung zueinander hergestellt worden. Sie wurden miteinander über aufwendige Rohrleitungen und Anschlußglieder miteinander verbunden. Wenn eine der Einheiten zu ersetzen oder zu reparieren war, mußte die gesamte Drei-Einheiten-Baugruppe aus dem Leitungssystem zum Ersatz oder zur Reparatur herausgenommen werden. Dies war sehr unbefriedigend. Außerdem wiesen die bekannten Anordnungen eine vergleichsweise große Anzahl von Bauteilen auf, so daß die Gesamtkosten beachtlich hoch waren.

Aus der FR-A-2 108 306 ist eine Baugruppe der im Oberbegriff des Anspruch 1 genannten Art bekannt. Bei ihr sind die Einheiten der Baugruppe über durchgehende Schraubbolzen miteinander verbunden. Dies erschwert die Montage und Demontage. Falls rechts und links der Baugruppe nicht genügend Platz ist, um die Schraubbolzen herauszuziehen, muß bei Defekt einer Einheit die gesamte Baugruppe ausgebaut werden. Die einzelnen Einheiten lassen sich nicht durch beliebige andere Einheiten gleicher Funktion ersetzten, wenn sie nicht in etwa die gleichen Außenabmessungen haben, da anderenfalls die Schraubbolzen nicht mehr passen.

Aus der US-A-3 559 764 ist eine Baugruppe für Schmiermittelsysteme, die mit Druckluft arbeiten, bekannt, bei welcher jedoch im Gegensatz zu der Baugruppe nachdem Oberbegriff des Anspruchs 1 die Eingangs- und Ausgangsöffnungen der einzelnen Einheiten nicht zueinander ausgerichtet, sondern je zwei Einheiten mittels Übereck-Adaptoren verhältnismänig aufwendiger Bauart miteinander zu verbinden sind. Dadurch kann eine druckverlustarme Kanalführung in der Baugruppe nicht erreicht werden. Nachteilig ist hierbei auch, daß die Baugruppe in sich abgeschlossen ist und weitere gleichartige Geräte nicht angeschlossen werden können; es ist also weder eine Verringerung noch eine Erhöhung der Anzahl der Einheiten ohne weiteres möglich.

Aufgabe der vorliegenden Erfindung ist es, eine Baugruppe der gattungsgemäßen Art vorzuschlagen, die einfacher im Aufbau und leichter in der Montage ist und daher insbesondere die zuvor aufgezeigten Mängel nicht aufweist.

Diese Aufgabe wird erfindungsgemäß mit den Merkmalen des kennzeichnenden Teils des Anspruchs 1 gelöst.

Nach der Erfindung sind die Einheiten, welche die Drei-Einheiten-Baugruppe bilden, unter Verwendung von Kupplungsgliedern miteinander verbunden, die eine einfache Gestalt haben, wobei nur Abdichtungsringe zwischen benachbarten Bauteilen vorgesehen sind. Eine einzelne Einheit, die ersetzt oder repariert werden soll, kann als solche einfach aus der Baugruppe herausgenommen werden, während die anderen Einheiten in der Anschlußverrohrung verbleiben können, so daß die hierfür erforderliche Arbeit und Zeit erheblich reduziert ist. Der Vorteil der individuellen Auswechselbarkeit kommt insbesondere zum Tragen, wenn die Brugruppe an einer Wand und in engen Raumverhältnissen montiert ist.

Außerdem besteht die erfindungsgemäße Baugruppe nur aus vergleichsweise wenigen untereinander austauschbaren Bauteilen, was eine wirtschaftlichere Herstellung zuläßt. Der Gebrauchszweck der erfindungsgemäßen Drei-Einheiten-Baugruppe ist auch im Hinblick auf variable Anwendung dadurch erheblich verbessert, daß einzelne Einheiten ohne weiteres, wo sie nicht benötigt werden, ausgelassen werden können, da die Verbindungsarten zwischen den einzelnen Einheiten identisch sind. Umgekehrt können auch weitere gleichartige Einheiten und zwar unabhängig von ihrer Breite zugeschaltet werden, da gleiche Kupplungsglieder und Uberspannglieder Verwendung finden.

Gemäß dem Merkmal des Anspruchs 2 weisen die seitlichen Vorsprünge und die zugeordneten Überspannglieder aneinander angepaßte schräge, z.B. V-förmige Eingriffsflächen auf, die dafür sorgen, daß ein zuverlässiges Zusammenspannen der Einzeleinheiten Druckluftfilter, Druckluftregler und Schmiergerät mit wenigen Handgriffen erfolgen kann.

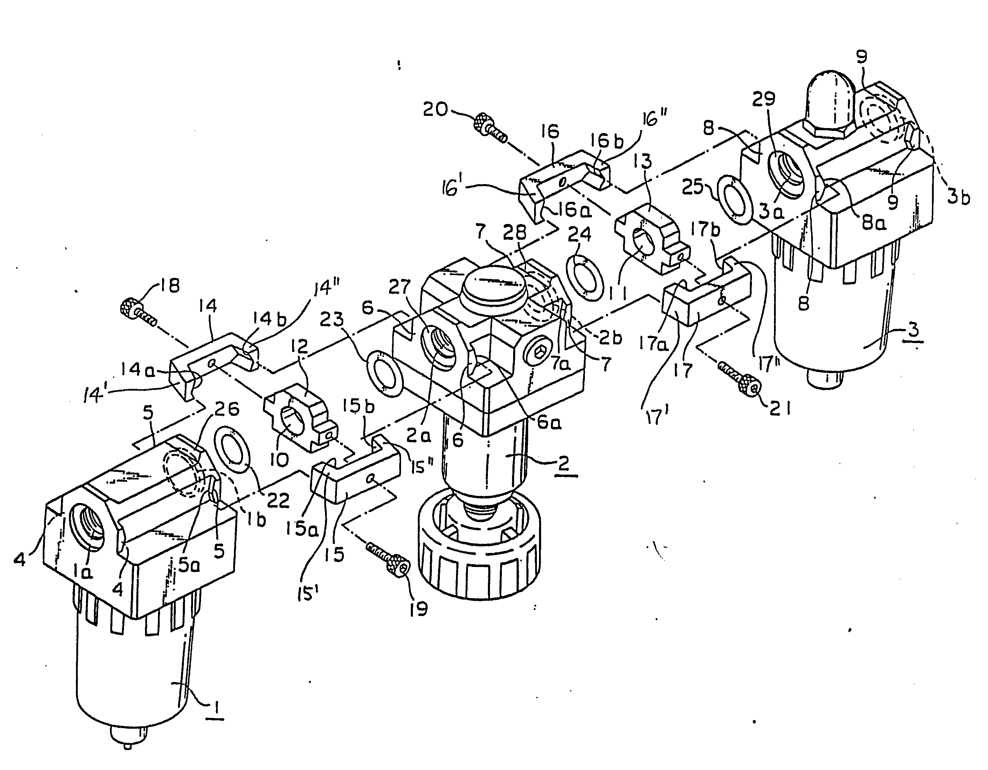

Ausführungsbeispiele der Erfindung werden nachfolgend anhand der Zeichnung näher erläutert.

Die einzige Figur veranschaulicht in Schrägansicht eine aus drei Einheiten bestehende Baugruppe für mit Druckluft arbeitende Schmiermittelsysteme nach der Erfindung, und zwar in explodierter Darstellung.

Die Baugruppe weist einen Druckluftfilter 1, einen Druckluftregler 2, ein Schmiergerät 3, Öffnungen 1a, 1b, 2a, 2b, 3a und 3b in entsprechenden Aufsätzen der Einheiten 1 bis 3 auf. Diese Aufsätze haben seitliche Vorsprünge 4, 5, 6, 7, 8 und 9. Zwischen den Aufsätzen befinden sich Kupplungsglieder 12, 13, die von Überspanngliedern 14, 15, 16, 17 in axialer Richtung überspannt werden. Die Überspannglieder 14, 15, 16 und 17 haben Eingriffsabschnitte 14', 14''; 15', 15''; 16', 16'' und 17', 17'', die ihrerseits konkav V-förmige Eingriffsflächen 14a, 14b; 15a, 15b; 16a, 16b und 17a, 17b aufweisen, die mit entsprechend konvex V-förmigen Eingriffsflächen 5a, 6a, 7a und 8a der Vorsprünge 4 bis 9 zum Verspannen der Einheiten 1 bis 3 gegeneinander zusammenwirken. Zwischen den Kupplungsgliedern 12, 13 und den angrenzenden Ansätzen der Einheiten 1 bis 3 liegen O-ringförmige Abdichtungsringe 22 bis 25.

Die dargestellte Drei-Einheiten-Baugruppe besteht also aus einem Druckluftfilter 1, einem Druckluftregler 2 und einem Schmiergerät 3. Diese Einheiten haben gleichen Aufbau und gleiche Funktion wie übliche Einheiten; sie sind daher nicht näher beschrieben. Nach der vorliegenden Erfindung sind die Einlaß- und Auslaßöffnungen 1a bis 3a und 1b bis 3b dieser Einheiten 1 bis 3 zueinander ausgerichtet; d.h. sie befinden sich auf einer geraden Linie. Paare von seitlichen Vorsprüngen 4 bis 9 sind an den jeweiligen Einlaß- und Auslaßöffnungen 1a bis 3b vorgesehen. Die seitlichen Vorsprünge 4 bis 9 jedes Paares sind symmetrisch auf einander gegenüberliegenden Seiten jeder Einlaß- oder Auslaßöffnung 1a bis 3b angeordnet.

Ein Kupplungsglied 12 ist zwischen benachbarten Öffnungen 1b und 2a, ein weiteres Kupplungsglied 13 zwischen den benachbarten Öffnungen 2b und 3a angeordnet. Die Kupplungsglieder 12, 13 haben jeweils mittige Durchtrittslöcher 10, 11, welche mit den zugeordneten Öffnungen 1b bis 3a in Strömungsverbindung stehen. Im wesentlichen kanalförmige Überspannglieder 14 bis 17 sind in Paaren derart vorgesehen, daß sie die einander gegenüberliegenden Seiten der Kupplungsglieder 12, 13 und dazu noch die Vorsprünge 4 bis 9 in axialer Richtung überspannen. Sie werden mit Schraubenbolzen 18 bis 21 an einander gegenüberliegende Seiten der zugeordneten Kupplungsglieder 12, 13 festgeschraubt. Sie haben jeweils Paare von Eingriffsabschnitten 14', 14''; 15', 15''; 16', 16'' und 17', 17'' mit Eingriffsflächen 14a, 14b; 15a, 15b; 16a, 16b und 17a, 17b, die mit entsprechenden Eingriffsflächen 5a, 6a, 7a und 8a der entsprechenden seitlichen Vorsprünge 5 bis 9 in Eingriff treten können. Die Eingriffsflächen 5a bis 8a haben jeweils zwei Flächenbereiche, die so zusammenlaufen, daß sie ein konvexes V-förmiges Profil bilden. Die Eingriffsflächen 14a bis 17b haben ebenfalls zwei Flächenbereiche, die so zusammenlaufen, daß sie ein konkaves V-förmiges Profil bilden, welches komplementär zu den Eingriffsflächen 5a bis 8a der Vorsprünge 4 bis 9 ausgebildet ist. Die V-förmigen Eingriffsflächen sind in Bezug auf zur Achse der Baugruppe senkrechte Ebenen so gestellt, daß die einzelnen Einheiten 1 bis 3 von den Überspanngliedern 14 bis 17 zusammengezogen werden, wenn diese beim Zusammenbau mit den Kuppelgliedern 12, 13 verschraubt werden. Die Abdichtungsringe 22 bis 25 werden zwischen einander gegenüberliegende Endflächen der Kuppelglieder 12, 13 und entsprechende Endflächen der Öffnungen 1b bis 3a gelegt und beim Zusammenbau zusammengedrückt. Die Abdichtungsringe 22 bis 25 sind teilweise in jeweilige Ringausnehmungen 26 bis 29 aufgenommen, die in den Endflächen der Öffnungen 1b bis 3a vorgesehen sind und diese umgeben.

Die Drei-Einheiten-Baugruppe für mit Druckluft arbeitende Schmiermittelsysteme nach der Erfindung kann demzufolge die zuvor beim Stande der Technik vorhandenen Probleme auf einfache Weise lösen.

**Patentansprüche**

1. Baugruppe für Schmiermittelsysteme, die mit Druckluft arbeiten, wobei die Baugruppe aus drei Einheiten, nämlich einem Druckluftfilter (1), einem Luftdruckregler (2) und einem Schmiergerät (3) besteht, welche jeweils zueinander ausgerichtet und in Reihe geschaltete Eingangs- und Ausgangsöffnungen (1a bis 3a, 1b bis 3b) haben, dadurch gekennzeichnet, daß seitliche Vorsprünge (4 bis 9) symmetrisch auf einander gegenüberliegenden Seiten jeder Öffnung (1a bis 3b) angebracht sind, daß Kupplungsglieder (12, 13) jeweils zwischen einander zugeordneten Öffnungen (1b bis 3a) angeordnet sind und Durchtrittslöcher (10, 11) haben, die die Öffnungen (1b bis 3a) miteinander verbinden, daß paarweise angeordnete Überspannglieder (14 bis 17) an einander gegenüberliegenden Seiten der einzelnen Kuppelglieder (12, 13) angeschraubt sind, daß die Überspannglieder (14 bis 17) die jeweils zugeordneten Kuppelglieder (12, 13) und die Vorsprünge (4 bis 9) in axialer Richtung überspannen und jeweils zwei der Einheiten (1 bis 3) an die einander gegenüberliegenden Endflächen der Kupplungsglieder (12, 13) ankoppeln, und daß Abdichtungsringe (22 bis 25) jeweils zwischen jeder Endfläche jedes Kupplungsgliedes (12, 13) und der zugeordneten Öffnung (1b bis 3a) angeordnet sind.

2. Baugruppe nach Anspruch 1, dadurch gekennzeichnet, daß die seitlichen Vorsprünge (4 bis 9) jeweils schräge Eingriffsflächen (5a bis 8a) haben, während die Überspannglieder (14 bis 17) Eingriffsabschnitte (14' 14''; 15' 15''; 16' 16''; 17', 17'') mit schrägen Eingriffsflächen (14a bis 17b) haben, die mit den schrägen Eingriffsflächen (5a bis 8a) der entsprechenden seitlichen Vorsprünge (4 bis 9) in Eingriff stehen.

**Claims**

1. An assembly for lubricant systems operating on compressed air, with the assembly being composed of three units, viz. a compressed air

**0 099 487**

filter (1), an air pressure regulator (2) and a lubricator (3) comprising respectively aligned and series-connected input and output ports (1a to 3a; 1b to 3b), characterized in that side projections (4 to 9) are symmetrically provided on opposite sides of each port (1a to 3b), that coupling members (12, 13) are disposed between ports (1b to 3a) respectively associated to one another and including communicating holes (10, 11) interconnecting the ports (1b to 3a), that pairs of striding members (14 to 17) are screwed to opposite sides of said individual coupling members (12, 13), that said striding members (14 to 17) stride the respectively associated coupling members (12, 13) and the projections (4 to 9) in the axial direction, coupling respectively two of the units (1 to 3) to the oppositely disposed end faces of the coupling members (12, 13), and that sealing rings (22 to 25) are respectively disposed between each end face of each coupling member (12, 13) and the associated port (1b to 3a).

2. An assembly according to claim 1, characterized in that the side projections (4 to 9) respectively have inclined engagement faces (5a to 8a), while the striding members (14 to 17) have engagement portions (14',14"; 15',15"; 16',16"; 17',17") having inclined engagement faces (14a to 17a) in engagement with the inclined engagement faces (5a to 8a) of the corresponding side projections (4 to 9).

**Revendications**

1. Construction modulaire pour des systèmes de graissage à l'air comprimé, la construction modulaire étant composée des trois éléments, notemmant d'un filtre à l'air comprimé (1), d'un dispositif regulateur de pression d'air (2) et d'un lubrificateur (3) comportant respectivement des orifices d'entrée et des orifices de sortie (1a à 3a; 1b à 3b) alignés l'un sur l'autre et montés en série,

caractérisé en ce que des saillies latérales (4 à 9) sont prévues symmétriquement sur des côtés opposés de chaque orifice (1a à 3b), que des organes d'accouplement (12, 13) sont respectivement disposés entre des orifices (1b à 3a) associés l'un à l'autre et prévus des trous de passage (10, 11) raccordant les orifices (1b à 3a), que des paires d'organes à l'écart (14 à 17) sont vissées aux côtés opposants des organes d'accouplement individuels (12, 13), que les organes à l'écart (14 à 17) écartent les organes d'accouplement (12, 13) respectivement associés et les saillies (4 à 9) en sens axial et accouplent respectivement deux des éléments (1 à 3) aux surfaces terminales opposées des organes d'accouplement (12, 13), et que des anneaux joints (22 à 25) sont respectivelment disposés entre chaque surface terminale de chaque organe d'accouplement (12, 13) et l'orifice (1b à 3a) associé.

2. Construction modulaire selon la revendication 1,

caractérisé en ce que les saillies latérales (4 à 9) comportent chaque fois des surfaces de contact (5a à 8a) inclinées tandique les organes à l'écart (14 à 17) sont prévus de sections de contact (14',14"; 15',15"; 16',16"; 17',17") ayant des surfaces de contact (14a à 17b) inclinées en contact avec les surfaces de contact (5a à 8a) inclinées des saillies latérales (4 à 9) correspondante.

0 099 487